# EUROPEAN PATENT SPECIFICATION

(11) **EP 3 054 772 B1**
(45) Date of publication and mention of the grant of the patent: **26.02.2020**
(21) Application number: 14852900.1
(22) Date of filing: 10.10.2014
(51) Int. Cl.: A01N 39/04, A01N 43/40, A01N 25/04, A01P 13/00

(54) **AQUEOUS HERBICIDAL CONCENTRATES**
WÄSSRIGE HERBIZIDE KONZENTRATE
CONCENTRÉS HERBICIDES AQUEUX

(30) Priority: 11.10.2013 US 201361889801 P
(43) Date of publication of application: 17.08.2016
(73) Proprietor: Dow AgroSciences LLC, Indianapolis, IN 46268 (US)
(72) Inventor: LI, Mei, Westfield, IN 46074 (US)
(74) Representative: f & e patent
(86) International application number: PCT/US2014/060010
(87) International publication number: WO 2015/054560

(56) References cited:
- WO-A1-2014/138177
- US-A- 5 965 487
- US-A1- 2010 113 274
- US-A1- 2012 071 320
- Anonymous: "AMINOPIELIK GOLD 530 EW, etykiety srodków ochrony roslin", , 31 December 2009 (2009-12-31), XP055347212, Retrieved from the Internet: URL:http://rogozna.republika.pl/aminopieli k+gold+530+ew+etykiety+srodkow.shtml [retrieved on 2017-02-17]
- KRZYSZTOF MARCZEWSKI: "The effect of herbicides on technological quality of grain of winter rye cultivars", POLISH JOURNAL OF AGRONOMY, vol. 8, 3 March 2012 (2012-03-03), pages 29-36, XP055347407,

## Description

### I. BACKGROUND

High-strength, *e.g.,* high concentration or high-load, pesticidal formulations are desirable for a variety of economic and environmental reasons, including the reduction of shipping and handling costs. Liquid, pre-mix concentrates containing two or more pesticidal active ingredients are useful in a wide variety of agricultural applications. For example, two or more pesticidal active ingredients may be combined in order to control a wider spectrum of pests, or to utilize multiple modes of action, compared to the individual active ingredients alone.

Normally, water insoluble pesticide active ingredients are formulated in water with water soluble pesticides as aqueous suspension concentrates (SC) or by dissolving the water insoluble pesticide in an organic solvent and forming an oil-in-water emulsion (EW). The preparation of these liquid, pre-mix concentrates can be challenging owing to chemical and/or physical instability. Examples of physical instability with these compositions include, for example, phase separation, crystallization, settling, sedimentation, gelling, and agglomeration.

Water soluble salts of pesticides, e.g., glyphosate salts, when dissolved in water form high ionic strength solutions that when combined with organic solutions containing oil-soluble pesticides normally form oil-in-water emulsions. These pre-mix, concentrate compositions, however, can be difficult to stabilize owing to the high ionic strength of the aqueous phase and require the proper choice of surfactants and/or additional inert ingredients. Previous efforts to combine oil soluble herbicides with aqueous solutions containing salts of glyphosate in a liquid concentrate formulation have been disclosed, for example, in US 6,713,433 B2, US 6,689,719 and US 6,369,001. US 5,965,487 describes compositions comprising esters of fluroxypyr and salts of 2,4-D.

### II. SUMMARY

Provided herein are stable aqueous herbicidal compositions comprising:
a) a water soluble salt of 2,4-D comprising, with respect to the total composition, from 200 gram acid equivalent per liter (g ae/L) to 550 g ae/L of 2,4-D;
b) a second herbicide comprising, with respect to the total composition, from 0.1 g ae/L to 20 g ae/L of halauxifen-methyl, from 20 g ae/L to 150 g ae/L of fluroxypyr-meptyl, or a mixture thereof;
c) from 0 g/L to 150 g/L, with respect to the total composition, of at least one of an ionic and/or a non-ionic surfactant;
d) from 10 g/L to 500 g/L, with respect to the total composition, of an organic solvent including a fatty acid amide; and
e) from 200 g/L to 800 g/L, with respect to the total composition, of water;
wherein the water soluble salt of 2,4-D comprises one or more organo ammonium cations which are dimethyl ammonium, diethyl ammonium, triethyl ammonium, dimethylethanol ammonium, diethanol ammonium, triethanol ammonium, triisopropanol ammonium, tetramethyl ammonium, choline, or mixtures thereof;
wherein the composition forms a stable, transparent, and homogenous herbicidal composition.

Also provided herein is a method of controlling undesirable vegetation comprising contacting the vegetation or an area adjacent thereto to prevent the emergence of growth of vegetation a herbicidally effective amount of a herbicidal composition comprising:
a) a water soluble salt of 2,4-D comprising, with respect to the total composition, from 200 g ae/L to 550 g ae/L of 2,4-D;
b) a second herbicide comprising, with respect to the total composition, from 0.1 g ae/L to 20 g ae/L of halauxifen-methyl, from 20 g ae/L to 150 g ae/L of fluroxypyr-meptyl, or a mixture thereof;
c) from 0 g/L to 150 g/L, with respect to the total composition, of at least one of an ionic and/or a non-ionic surfactant;
d) from 10 g/L to 500 g/L, with respect to the total composition, of an organic solvent including fatty acid amide; and
e) an aqueous phase comprising, with respect to the total composition, from 200 g/L to 800 g/L of water;
wherein the water soluble salt of 2,4-D comprises one or more organo ammonium cations which are dimethyl ammonium, diethyl ammonium, triethyl ammonium, dimethylethanol ammonium, diethanol ammonium, triethanol ammonium, triisopropanol ammonium, tetramethyl ammonium, choline, or mixtures thereof;
wherein the composition forms a stable, transparent, and homogenous herbicidal composition.

### DETAILED DESCRIPTION

The inventors herein have surprisingly found that combining an aqueous concentrate of a water soluble salt of 2,4-D with a water insoluble second herbicide dissolved in a water immiscible organic solvent, provides a stable, transparent, and homogenous herbicidal composition that exhibits good high and low temperature storage stability even in the absence of any surfactants and readily forms a stable emulsion upon dilution into a spray solution of water.

Provided herein are stable aqueous herbicidal compositions comprising:
a) a water soluble salt of 2,4-D comprising, with respect to the total composition, from 200 gram acid equivalent per liter (g ae/L) to 550 g ae/L of 2,4-D;
b) a second herbicide comprising, with respect to the total composition, from 0.1 g ae/L to 20 ae/L of halauxifen-methyl and/or from 20 g ae/L to 150 g ae/L of fluroxypyr-meptyl;
c) from 0 g/L to 150 g/L of at least one of an ionic and a non-ionic surfactant;
d) from 10 g/L to 500 g/L, with respect to the total composition, of an organic solvent including a fatty acid amide; and
e) from 200 g/L to 800 g/L, with respect to the total composition, of water;
wherein the water soluble salt of 2,4-D comprises one or more organo ammonium cations which are dimethyl ammonium, diethyl ammonium, triethyl ammonium, dimethylethanol ammonium, diethanol ammonium, triethanol ammonium, triisopropanol ammonium, tetramethyl ammonium, choline, or mixtures thereof;
wherein the composition forms a stable, transparent, and homogenous herbicidal composition. These compositions also show no visible phase separation after storage at 54 °C for 2 weeks and/or no crystal formation after -10/40 °C freeze/thaw cycling conditions every 24 hours for 2 weeks.

In certain embodiments, the described compositions optionally include additional active ingredients and/or inert formulation ingredients.

In certain embodiments, the described aqueous herbicide compositions form stable emulsions upon dilution into a spray solution containing water.

Also provided herein is a method of controlling undesirable vegetation comprising contacting the vegetation or an area adjacent thereto to prevent the emergence of growth of vegetation a herbicidally effective amount of a herbicidal composition comprising:
a) a water soluble salt of 2,4-D comprising, with respect to the total composition, from 200 g ae/L to 550 g ae/L of 2,4-D;
b) a second herbicide comprising, with respect to the total composition, from 0.1 g ae/L to 20 g ae/L of halauxifen-methyl and/or from 20 g ae/L to 150 g ae/L of fluroxypyr-meptyl;
c) from 0 g/L to 150 g/L, with respect to the total composition, of at least one of an ionic and/or a non-ionic surfactant;
d) from 10 g/L to 500 g/L, with respect to the total composition, of an organic solvent including a fatty acid amide; and
e) an aqueous phase comprising, with respect to the total composition, from 200 g/L to 800 g/L of water;
wherein the water soluble salt of 2,4-D comprises one or more organo ammonium cations which are dimethyl ammonium, diethyl ammonium, triethyl ammonium, dimethylethanol ammonium, diethanol ammonium, triethanol ammonium, triisopropanol ammonium, tetramethyl ammonium, choline, or mixtures thereof;
wherein the composition forms a stable, transparent, and homogenous herbicidal composition.

### A. 2,4-D Water Soluble Salts

The term "water-soluble" in relation to a herbicide or a salt thereof as used herein means having solubility in deionized water at 20 °C sufficient to enable the water-soluble active ingredient to be dissolved completely in the aqueous phase of a composition at the desired concentration. In some embodiments, the water-soluble active ingredients useful in the compositions described herein have solubility in deionized water at 20 °C of not less than 50 g/L or not less than 200 g/L.

The water-soluble salts of 2,4-D (2,4-dichlorophenoxyacetic acid) contained in the aqueous compositions described herein include salts containing one or more cations selected from isopropyl ammonium, dimethyl ammonium, diethyl ammonium, triethyl ammonium, dimethylethanol ammonium, diethanol ammonium, triethanol ammonium, triisopropanol ammonium, tetramethyl ammonium, and *N,N,N*-trimethylethanol ammonium (choline). In certain embodiments, the water-soluble salt of 2,4-D is 2,4-D dimethyl ammonium or 2,4-D *N,N,N*-trimethylethanol ammonium (choline).

The described aqueous compositions comprise, with respect to the total composition, from 200 gram acid equivalent per liter (g ae/L) to 550 g ae/L of at least one dissolved 2,4-D salt, *e.g.,* 2,4-D dimethyl ammonium or 2,4-D choline. The water-soluble herbicide active ingredient of the compositions described herein, e.g., the herbicide 2,4-D dimethyl ammonium or 2,4-D choline, are present at a concentration in the composition as a whole sufficient, upon dilution of the composition in a suitable volume of water and applied by spraying to the target locus, to be herbicidally effective. In some embodiments, the described compositions comprise from 200 to 550 g ae/L, from 200 to 450 g ae/L, from 200 to 350 g ae/L, from 200 to 300 g ae/L, from 200 to 280 g ae/L or from 220 to 260 g ae/L of 2,4-D dimethyl ammonium and/or 2,4-D choline. In certain embodiments, the described compositions comprise from 250 to 550 g ae/L, from 300 to 550 g ae/L, from 300 to 525 g ae/L, from 350 to 525 g ae/L, from 400 to 525 g ae/L, from 450 to 525 g ae/L, from 480 to 510 g ae/L, from 350 to 500 g ae/L, from 340 to 450 g ae/L, from 340 to 400 g ae/L, from 340 to 380 g ae/L, from 300 to 400 g ae/L, from 300 to 380 g ae/L, from 300 to 360 g ae/L, from 310 to 350 g ae/L, or from 320 to 340 g ae/L of 2,4-D dimethyl ammonium and/or 2,4-D choline.

### B. Second herbicide

As used herein, halauxifen-methyl, also known as Arylex™ Active (trademark of Dow AgroSciences, LLC), is methyl 4-amino-3-chloro-6-(4-chloro-2-fluoro-3-methoxyphenyl)pyridine-2-carboxylate and has the following structure: 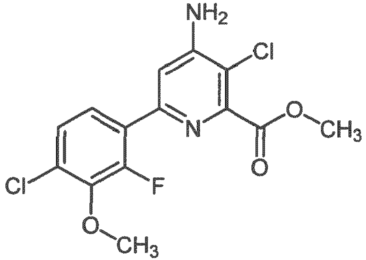 Halauxifen-methyl provides post-emergence control of some broad-leaved weeds.

As used herein, fluroxypyr-meptyl, also known as fluroxypyr-MHE, is 1-methylheptyl [(4-amino-3,5-dichloro-6-fluoropyridin-2-yl)oxy]acetate and has the following structure: 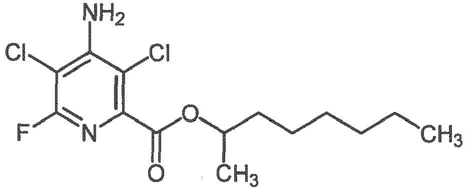 Fluroxypyr-meptyl's herbicidal activity is exemplified in The Pesticide Manual, Fifteenth Edition, 2009. Fluroxypyr-meptyl has a melting point of about 58 °C and provides post-emergence control of some broad-leaved weeds.

In some embodiments, the described compositions comprise from 0.1 g acid equivalent (ae)/L to 20 g ae/L, from 0.1 g ae/L to 15 g ae/L, from 0.1 g ae/L to 10 g ae/L, from 0.5 g ae/L to 10 g ae/L, from 1 g ae/L to 10 g ae/L, from 1 g ae/L to 8 g ae/L, from 1 g ae/L to 7 g ae/L, from 1 g ae/L to 5 g ae/L, from 1 g ae/L to 4 g ae/L, from 1 g ae/L to 3 g ae/L, from 2 g ae/L to 6 g ae/L, from 3 g ae/L to 6 g ae/L, from 4 g ae/L to 6 g ae/L, from 2 g ae/L to 5 g ae/L or from 2 g ae/L to 4 g ae/L of halauxifen-methyl.

In some embodiments, the described compositions comprise from 20 g ae/L to 150 g ae/L, from 30 g ae/L to 150 g ae/L, from 40 g ae/L to 150 g ae/L, from 40 g ae/L to 130 g ae/L, from 50 g ae/L to 120 g ae/L, from 60 g ae/L to 120 g ae/L, from 70 g ae/L to 120 g ae/L, from 20 g ae/L to 120 g ae/L, from 20 g ae/L to 100 g ae/L, from 20 g ae/L to 90 g ae/L, from 20 g ae/L to 80 g ae/L, from 20 g ae/L to 70 g ae/L, from 20 g ae/L to 60 g ae/L, from 20 g ae/L to 50 g ae/L, from 30 g ae/L to 40 g ae/L, from 30 g ae/L to 90 g ae/L, from 40 g ae/L to 90 g ae/L, from 50 g ae/L to 90 g ae/L, from 60 g ae/L to 90 g ae/L, or from 70 g ae/L to 85 g ae/L of fluroxypyr-meptyl.

In certain embodiments, the second herbicide for use in the described compositions is a combination of both fluroxypyr-meptyl and halauxifen-methyl. When combined, the weight ratio, on an ae basis, of the 2,4-D organo ammonium salt to halauxifen-methyl in the described compositions ranges from 5500:1 to 10:1, from 2500:1 to 10:1, from 1500:1 to 10:1, from 500:1 to 10:1, from 400:1 to 10:1, from 300:1 to 10:1, from 200:1 to 10:1, from 150:1 to 10:1, from 125:1 to 10:1, from 100:1 to 10:1, from 75:1 to 10:1, from 50:1 to 10:1, from 25:1 to 10:1, or from 15:1 to 10:1. In some embodiments the weight ratio, on an ae basis, of the 2,4-D organo ammonium salt to fluroxypyr-meptyl in the described compositions may range from 30:1 to 1:1, from 25:1 to 1:1, from 20:1 to 1:1, from 15:1 to 1:1, from 10:1 to 1:1, from 8:1 to 1:1, from 7:1 to 1:1, from 6:1 to 1:1, from 5:1 to 1:1, from 4:1 to 1:1, from 3:1 to 1:1, or from 2:1 to 1:1.

### C. Surfactants

In some embodiments, the compositions described herein may include one or more surfactants. In some embodiments, the compositions described herein may not include a surfactant. Surfactants useful with the methods and compositions described herein include ionic and/or nonionic surfactants such as, for example, phosphate ester surfactants, polymeric surfactants, or mixtures thereof. Examples of polymeric surfactants include AB or ABA block copolymers; block or graft acrylate or methacrylate copolymers; and alkyd polyethylene oxide resins. Suitable polymeric surfactants include: (1) AB block copolymers that contain EO and PO blocks such as ethylene oxide-propylene oxide (EO-PO) block copolymers, and (2) ABA block copolymers having a hydrophilic portion of polyethylene oxide and a hydrophobic portion of poly(12-hydroxystearate). Examples of suitable phosphate ester surfactants include: (1) acids or salts of mono and dialkyl phosphate esters, (2) acids or salts of ethoxylated mono and dialkyl phosphate esters, (3) acids or salts of mono and dialkyl phosphate esters of ethoxylated tristyrylphenol, (4) acids or salts of mono and dialkyl phosphate esters of ethoxylated phenol and ethoxylated alkylphenols, and mixtures thereof.

In some embodiments the ionic and/or nonionic surfactant is Atlox™ 4912 (Croda; Edison, NJ), and/or Termul™ 2510 (Huntsman International LLC; The Woodlands, TX), and/or Atlox™ DP 13/6.

In some embodiments, the described compositions comprise, with respect to the total composition, from 0 g/L to 150 g/L, from 0 g/L to 125 g/L, from 0 g/L to 100 g/L, from 0 g/L to 75 g/L, from 0 g/L to 50 g/L, from 0 g/L to 40 g/L, from 0 g/L to 30 g/L, from 0 g/L to 20 g/L, from 0 g/L to 10 g/L, from 0 g/L to 5 g/L, or from 0 g/L to 3 g/L of one or more surfactants. In certain embodiments, the described compositions comprise from 10 g/L to 100 g/L, from 10 g/L to 90 g/L, from 10 g/L to 80 g/L, from 10 g/L to 70 g/L, from 10 g/L to 60 g/L, from 10 g/L to 50 g/L, from 20 g/L to 50 g/L, from 20 g/L to 40 g/L, or from 20 g/L to 30 g/L of one or more surfactants.

### D. Water Immiscible Organic Solvent

The described compositions include a water immiscible organic solvent. A "water immiscible organic solvent" as defined herein means an organic solvent that when mixed with an equivalent volume of water forms two discrete liquid layers. Organic solvents used in the methods and compositions described herein include fatty acid amides such as, *e.g.,* N,N-dimethylcaprylamide (N,N-dimethyloctanamide), N,N-dimethylcapramide (N,N-dimethyldecanamide), and mixtures thereof, which are available commercially as Agnique® AMD 810 and Agnique® AMD 10 from BASF-Cognis (Cincinnati, OH), Genagen® 4166, Genagen®4231 and Genagen® 4296 from Clariant (Charlotte, NC), Hallcomid M-8-10 and Hallcomid M-10 from Stepan (Northfield, IL), Armid DM10 and DM810 from AkzoNobel (Chicago, IL), and the morpholine amides of caprylic / capric fatty acids (C₈/C₁₀) which are commercially available as JEFFSOL® AG-1730 Solvent from Huntsman International LLC (The Woodlands, TX).

In some embodiments, the compositions described herein comprise from 10 g/L to 500 g/L, from 10 g/L to 450 g/L, from 10 g/L to 400 g/L, from 10 g/L to 350 g/L, from 10 g/L to 300 g/L, from 10 g/L to 250 g/L, from 10 g/L to 200 g/L, from 10 g/L to 150 g/L, from 10 g/L to 100 g/L, from 10 g/L to 80 g/L, from 10 g/L to 70 g/L, from 20 g/L to 70 g/L, from 30 g/L to 60 g/L, from 30 g/L to 50 g/L, or from 35 g/L to 45 g/L of an organic solvent. In some embodiments, the compositions described herein comprise from 50 g/L to 450 g/L, from 75 g/L to 400 g/L, from 100 g/L to 400 g/L, from 125 g/L to 375 g/L, from 150 g/L to 350 g/L, from 170 g/L to 330 g/L, from 170 g/L to 300 g/L, from 170 g/L to 275 g/L, from 170 g/L to 250 g/L, from 170 g/L to 230 g/L, from 180 g/L to 230 g/L, from 190 g/L to 230 g/L, from 200 g/L to 230 g/L, or from 210 g/L to 230 g/L of a water immiscible organic solvent.

### E. Water

The compositions described herein comprise from 200 g/L to 800 g/L of water. The water serves as both an aqueous solvent and a carrier for the ingredients in the described compositions. In some embodiments, the compositions described herein comprise from 200 g/L to 700 g/L, from 200 g/L to 600 g/L, from 200 g/L to 500 g/L, from 200 g/L to 400 g/L, from 250 g/L to 400 g/L, from 275 g/L to 400 g/L, from 300 g/L to 400 g/L, from 325 g/L to 400 g/L, or from 325 g/L to 375 g/L of water.

### F. Storage Stability

As used herein, "stable" compositions are compositions that are stable physically and/or chemically for defined periods of time to the environments in which they are produced, transported and/or stored. Aspects of stable compositions include, but are not limited to: physical stability at temperatures that range from 0 °C to 50 °C, homogeneity, pourability, liquids that form little or no precipitated solids or exhibit little or no phase separation, compositions that readily dissolve or disperse when poured into a spray tank of water and retain their biological efficacy when applied, for example, by spray application to target pests. In some embodiments, the described compositions form stable, homogeneous concentrates that do not exhibit phase separations under the storage conditions. In some embodiments, the described compositions exhibit very little change in viscosity under the storage conditions. In some embodiments, the described compositions exhibit very little chemical decomposition of the active ingredients under the storage conditions.

As used herein, the term "transparent, homogenous herbicidal composition" means compositions that pass light through with clarity. Stated another way, the transparent, homogeneous herbicidal compositions are visually clear to the naked eye.

In some embodiments, the described compositions are stable at temperatures of greater than or equal to 40 °C for a period of at least 4, 6 or 8 weeks. In some embodiments, the described compositions are stable at temperatures greater than or equal to 54 °C for a period of at least 2 weeks. In some embodiments, the described compositions do not exhibit or do not significantly exhibit separation or precipitation (or crystallization) of any of the components at elevated temperatures.

In some embodiments, the described compositions remain as homogeneous concentrates for at least 2 weeks at temperatures below 20 °C, below 10 °C, or equal to or less than 5 °C, or 0 °C. In certain embodiments, the compositions are stable at these temperatures for at least 2, 4, 6, or 8 weeks.

In some embodiments, the described compositions remain as homogeneous concentrates after subjecting them to freeze/thaw (F/T) conditions for at least 2 weeks where the temperature is cycled from -10 °C to 40 °C every 24 hours.

### G. Optional Ingredients

The compositions disclosed herein may optionally contain inert formulation ingredients such as, but not limited to, dispersants, surfactants and wetting agents. These optional inert ingredients may include surfactants conventionally used in the art of formulation that are described, *inter alia,* in "McCutcheon's Detergents and Emulsifiers Annual," MC Publishing Corp., Ridgewood, New Jersey, 1998 and in the "Encyclopedia of Surfactants," Vol. I-III, Chemical Publishing Co., New York, 1980-81. These surface-active agents can be anionic, cationic or nonionic in character and can be employed as emulsifying agents, wetting agents, suspending agents, or for other purposes.

In addition to the specific methods and compositions set forth above, the methods and compositions described herein also may include compositions containing one or more additional compatible ingredients. These additional ingredients may include, for example, one or more pesticides or other ingredients, which may be dissolved or dispersed in the composition and may be selected from acaricides, algicides, antifeedants, avicides, bactericides, bird repellents, chemosterilants, defoliants, desiccants, disinfectants, fungicides, herbicide safeners, herbicides, insect attractants, insecticides, insect repellents, mammal repellents, mating disrupters, molluscicides, nematicides, plant activators, plant growth regulators, rodenticides, semiochemicals, synergists, and virucides. Also, any other additional ingredients providing functional utility such as, for example, antifoam agents, antimicrobial agents, buffers, corrosion inhibitors, dispersing agents, dyes, fragrants, freezing point depressants, neutralizing agents, odorants, penetration aids, sequestering agents, spray drift control agents, spreading agents, stabilizers, sticking agents, viscosity-modifying additives, water soluble solvents and the like, may be included in these compositions.

When the described compositions are used in combination with an additional active ingredients such as, for example, herbicide active ingredients, the compositions described herein can be formulated with the other active ingredient or active ingredients as premix concentrates, tank-mixed in water with the other active ingredient or active ingredients for spray application or applied sequentially with the other active ingredient or active ingredients in separate spray applications.

### H. Methods of Preparation and Use

In some embodiments, the compositions described herein are prepared by the steps of:
(1) preparing a solution of the second herbicide in the organic solvent and, optionally, including a surfactant;
(2) adding the solution prepared in step (1) to a concentrated solution of a 2,4-D organo ammonium salt in water with good mixing to form a transparent, homogenous herbicidal composition; and
(3) optionally, adding any additional compatible active or inert ingredients.

Exemplary compatible ingredients that may be added to the described compositions include, but are not limited to, water soluble or water insoluble dispersing surfactants, water insoluble active ingredients and optionally, other inert ingredients such as pH buffers, wetting agents, antifreeze agents, antifoam agents, biocides, etc.

The aqueous herbicidal compositions described herein may optionally be diluted in an aqueous spray mixture for agricultural application such as for weed control in crop fields or in turf. Such compositions are typically diluted with an inert carrier, such as water, before application. The diluted compositions, which are usually applied, for example, to weeds, the locus of weeds or the locus of where weeds may eventually emerge, in some embodiments contain 0.0001 to 1 weight percent active ingredient or from 0.001 to 0.05 weight percent of active ingredient. The present compositions can be applied, for example, to weeds or their locus by the use of conventional ground or aerial sprayers, by addition to irrigation water and by other conventional means known to those skilled in the art.

The compositions and methods described herein may be used in controlling undesirable vegetation in crops possessing single, multiple or stacked genomic traits conferring tolerance to one or more herbicide chemistries and/or inhibitors with single or multiple modes of action.

### Examples

The following Examples are presented to illustrate various aspects of the compositions described herein.

### Example 1: 2,4-D choline salt aqueous concentrate

A 2,4-D choline salt aqueous concentrate solution was prepared by reacting 2,4-D acid technical with an equimolar amount of choline hydroxide in water at ambient temperature. Additional water was then added, if needed, to reach a target 2,4-D acid equivalent (ae) concentration of 45.7 wt%.

### Example 2: Halauxifen-methyl and fluroxypyr-MHE concentrate in Genagen 4166 solvent

A halauxifen-methyl /fluroxypyr-MHE concentrate solution in Genagen 4166 solvent was prepared by dissolving halauxifen-methyl (2.25 active ingredient (ai) wt%) and fluroxypyr-MHE (48.36 ai wt%) in Genagen 4166 (49.39 wt%) with mixing until a clear solution was obtained at ambient temperature.

### Example 3: Herbicidal aqueous composition of 2,4-D choline, halauxifen-methyl and fluroxypyr-meptyl

The halauxifen-methyl /fluroxypyr-MHE concentrate solution (Example 2, 13.33 g), additional Genagen 4166 (12.42 g), Atlox 4912 (0.25 g), and Atlox DP 13/6 (2.0 g) were mixed together to provide a homogeneous organic phase, to which the 2,4-D choline aqueous concentrate (Example 1, 72.0 g) was added. Upon mild hand mixing, a transparent, homogenous herbicidal composition was formed with a pH of 7.05 that remained as a transparent, homogenous herbicidal composition without any crystal formation/growth or phase separation after: (1)2 weeks of storage at freeze-thaw (F/T) conditions (-10 °C/40 °C cycle every 24 hours), and (2) 2 weeks of storage at 54 °C. The active ingredients in the composition were found to be chemically stable as evidenced by >95% retention of the halauxifen-methyl, fluroxypyr-MHE and 2,4-D after 2 weeks of storage at 54 °C. The melting point of the sample was less than -20 °C according to differential scanning calorimetry (DSC) measurement. Diluting a 1% sample of this solution in 342 ppm hardness water resulted in the formation of an opaque, oil-in-water emulsion.

### Example 4: herbicidal aqueous composition of 2,4-D choline, halauxifen-methyl and fluroxypyr-meptyl

The halauxifen-methyl/fluroxypyr-MHE concentrate solution (Example 2, 13.33 g) and additional Genagen 4166 (14.67 g) were mixed together to provide a homogeneous organic phase, to which the 2,4-D choline aqueous concentrate (example 1, 72.0 g) was added. Upon mild hand mixing, a transparent, homogenous herbicidal composition was formed with a pH of 7.3 that remained as a transparent, homogenous herbicidal composition without any crystal formation/growth or phase separation after: (1) 2 weeks storage at freeze-thaw (F/T) conditions (-10 °C/40 °C cycle every 24 hours), and (2) storage at 54 °C for 2 weeks. Diluting a 5% sample of this solution in 342 ppm hardness water resulted in the formation of an opaque, oil-in-water emulsion. The droplet size of the emulsion was analyzed using a Mastersizer 2000 (Malvern Instruments, UK) and found to be 3.0 microns (D₅₀). The emulsion was free of cream or oil formation after 24 hours at ambient temperature.

## Claims

1. A stable aqueous herbicidal composition comprising:
a. a water soluble salt of 2,4-D comprising, with respect to the total composition, from 200 gram acid equivalent per liter (g ae/L) to 550 g ae/L of 2,4-D;
b. a second herbicide comprising, with respect to the total composition, from 0.1 g ae/L to 20 g ae/L of halauxifen-methyl, from 20 g ae/L to 150 g ae/L of fluroxypyr-meptyl, or a mixture thereof;
c. from 0 g/L to 150 g/L, with respect to the total composition, of at least one of an ionic and/or a non-ionic surfactant;
d. from 10 g/L to 500 g/L, with respect to the total composition, of an organic solvent including a fatty acid amide; and
e. from 200 g/L to 800 g/L, with respect to the total composition, of water;
wherein the water soluble salt of 2,4-D comprises one or more organo ammonium cations which are dimethyl ammonium, diethyl ammonium, triethyl ammonium, dimethylethanol ammonium, diethanol ammonium, triethanol ammonium, triisopropanol ammonium, tetramethyl ammonium, choline, or mixtures thereof; wherein the composition forms a stable, transparent, and homogenous herbicidal composition.

2. A method of controlling undesirable vegetation comprising contacting the vegetation or an area adjacent thereto to prevent the emergence of growth of vegetation a herbicidally effective amount of a herbicidal composition diluted with an inert carrier before application, the herbicidal composition comprising:
a. a water soluble salt of 2,4-D comprising, with respect to the total composition, from 200 g ae/L to 550 g ae/L of 2,4-D;
b. a second herbicide comprising, with respect to the total composition, from 0.1 g ae/L to 20 g ae/L of halauxifen-methyl, from 20 g ae/L to 150 g ae/L of fluroxypyr-meptyl, or a mixture thereof;
c. from 0 g/L to 150 g/L, with respect to the total composition, of at least one of an ionic and/or a non-ionic surfactant;
d. from 10 g/L to 500 g/L, with respect to the total composition, of an organic solvent including a fatty acid amide; and
e. an aqueous phase comprising, with respect to the total composition, from 200 g/L to 800 g/L of water;
wherein the water soluble salt of 2,4-D comprises one or more organo ammonium cations which are dimethyl ammonium, diethyl ammonium, triethyl ammonium, dimethylethanol ammonium, diethanol ammonium, triethanol ammonium, triisopropanol ammonium, tetramethyl ammonium, choline, or mixtures thereof; wherein the composition forms a stable, transparent, and homogenous herbicidal composition.

3. The herbicidal composition of Claim 1 or the method of Claim 2, wherein the organo ammonium cations are dimethyl ammonium or choline.

4. The herbicidal composition or the method of any of the preceding Claims, wherein the second herbicide is halauxifen-methyl and the weight ratio on an ae basis of the 2,4-D to halauxifen-methyl is from 5500:1 to 10:1.

5. The herbicidal composition or the method of any of the preceding Claims, wherein the second herbicide is fluroxypyr-meptyl and the weight ratio on an ae basis of the 2,4-D to fluroxypyr-meptyl is from 30:1 to 1:1.

6. The herbicidal composition or the method of any of the preceding Claims, wherein the second herbicide is a mixture of halauxifen-methyl and fluroxypyr-meptyl.

7. The herbicidal composition or the method of any of the preceding Claims, further comprising an agriculturally acceptable adjuvant or carrier.

8. The herbicidal composition or the method of any of the preceding Claims, further comprising a herbicide safener.

9. The method of any of the preceding Claims, wherein the undesirable vegetation is controlled in a herbicide tolerant crop.

10. The method of Claim 9, wherein the herbicide tolerant crop possesses single, multiple or stacked traits conferring tolerance to one or more herbicide chemistries and/or inhibitors with single or multiple modes of action.

11. The method of any of Claims 9-10, wherein the undesirable vegetation comprises a herbicide resistant or tolerant weed.

## Patentansprüche

1. Eine stabile wässrige herbizide Zusammensetzung umfassend:
a. ein wasserlösliches Salz von 2,4-D, umfassend, bezogen auf die Gesamtzusammensetzung, von 200 Gramm Säureäquivalent pro Liter (g ae/L) bis 550 g ae/L an 2,4-D;
b. ein zweites Herbizid umfassend, bezogen auf die Gesamtzusammensetzung, von 0,1 g ae/L bis 20 g ae/L an Halauxifen-Methyl, von 20 g ae/L bis 150 g ae/L an Fluroxypyr-Meptyl oder eine Mischung davon;
c. von 0 g/L bis 150 g/L, bezogen auf die Gesamtzusammensetzung, von mindestens einem ionischen und/oder einem nichtionischen oberflächenaktiven Mittel;
d. von 10 g/L bis 500 g/L, bezogen auf die Gesamtzusammensetzung, eines organischen Lösungsmittels, welches ein Fettsäureamid enthält; und
e. von 200 g/L bis 800 g/L, bezogen auf die Gesamtzusammensetzung, an Wasser;
wobei das wasserlösliche Salz von 2,4-D ein oder mehrere Organoammoniumkationen umfasst, welche Dimethylammonium, Diethylammonium, Triethylammonium, Dimethylethanolammonium, Diethanolammonium, Triethanolammonium, Triisopropanolammonium, Tetramethylammonium, Cholin oder Mischungen davon sind;
wobei die Zusammensetzung eine stabile, transparente und homogene herbizide Zusammensetzung bildet.

2. Ein Verfahren zur Bekämpfung unerwünschter Vegetation umfassend das Inkontaktbringen der Vegetation oder einer daran angrenzenden Fläche, um das Auflaufen oder Wachstum der Vegetation zu verhindern, mit einer herbizid wirksamen Menge einer herbiziden Zusammensetzung, die mit einem inerten Trägerstoff vor der Anwendung verdünnt worden ist, wobei die herbizide Zusammensetzung umfasst:
a. ein wasserlösliches Salz von 2,4-D, umfassend, bezogen auf die Gesamtzusammensetzung, von 200 g ae/L bis 550 g ae/L an 2,4-D;
b. ein zweites Herbizid umfassend, bezogen auf die Gesamtzusammensetzung, von 0,1 g ae/L bis 20 g ae/L an Halauxifen-Methyl, von 20 g ae/L bis 150 g ae/L an Fluroxypyr-Meptyl oder eine Mischung davon;
c. von 0 g/L bis 150 g/L, bezogen auf die Gesamtzusammensetzung, von mindestens einem ionischen und/oder einem nichtionischen oberflächenaktiven Mittel;
d. von 10 g/L bis 500 g/L, bezogen auf die Gesamtzusammensetzung, eines organischen Lösungsmittels, welches ein Fettsäureamid enthält; und
e. eine wässrige Phase umfassend, bezogen auf die Gesamtzusammensetzung, von 200 g/L bis 800 g/L an Wasser;
wobei das wasserlösliche Salz von 2,4-D ein oder mehrere Organoammoniumkationen umfasst, welche Dimethylammonium, Diethylammonium, Triethylammonium, Dimethylethanolammonium, Diethanolammonium, Triethanolammonium, Triisopropanolammonium, Tetramethylammonium, Cholin oder Mischungen davon sind;
wobei die Zusammensetzung eine stabile, transparente und homogene herbizide Zusammensetzung bildet.

3. Die herbizide Zusammensetzung gemäß Anspruch 1 oder das Verfahren gemäß Anspruch 2, wobei die Organoammoniumkationen Dimethylammonium oder Cholin sind.

4. Die herbizide Zusammensetzung oder das Verfahren gemäß irgendeinem der vorhergehenden Ansprüche, wobei das zweite Herbizid Halauxifen-Methyl ist und das Gewichtsverhältnis des 2,4-D zu Halauxifen-Methyl auf einer Säureäquivalentbasis von 5500:1 bis 10:1 beträgt.

5. Die herbizide Zusammensetzung oder das Verfahren gemäß irgendeinem der vorhergehenden Ansprüche, wobei das zweite Herbizid Fluroxypyr-Meptyl ist und das Gewichtsverhältnis des 2,4-D zu Fluroxypyr-Meptyl auf einer Säureäquivalentbasis von 30:1 bis 1:1 beträgt.

6. Die herbizide Zusammensetzung oder das Verfahren gemäß irgendeinem der vorhergehenden Ansprüche, wobei das zweite Herbizid eine Mischung von Halauxifen-Methyl und Fluroxypyr-Meptyl ist.

7. Die herbizide Zusammensetzung oder das Verfahren gemäß irgendeinem der vorhergehenden Ansprüche, des Weiteren umfassend einen landwirtschaftlich akzeptablen Hilfs- oder Trägerstoff.

8. Die herbizide Zusammensetzung oder das Verfahren gemäß irgendeinem der vorhergehenden Ansprüche, des Weiteren umfassend einen Herbizid-Safener.

9. Das Verfahren gemäß irgendeinem der vorhergehenden Ansprüche, wobei die unerwünschte Vegetation in einer herbizidtoleranten Nutzpflanze bekämpft wird.

10. Das Verfahren gemäß Anspruch 9, wobei die herbizidtolerante Nutzpflanze einzelne, mehrere oder gestapelte Merkmale, die Toleranz gegenüber einer oder mehrerer Herbizidchemikalien und/oder Hemmern mit einer oder mehreren Wirkweisen verleihen, besitzt.

11. Das Verfahren gemäß irgendeinem der Ansprüche 9-10, wobei die unerwünschte Vegetation ein herbizidresistentes oder -tolerantes Unkraut umfasst.

## Revendications

1. Composition herbicide aqueuse stable, comprenant :
(a) un sel hydrosoluble de 2,4-D constitué par du 2,4-D en une quantité, rapportée à la composition totale, de 200 grammes d'équivalent acide par litre (g ea/L) à 550 g ea/L,
(b)un deuxième herbicide constitué par de l'halauxifène-méthyl en une quantité, rapportée à la composition totale, de 0,1 g ea/L à 20 g ea/L, du fluroxypyr-meptyl en une quantité, rapportée à la composition totale, de 20 g ea/L à 150 g ea/L, ou un mélange de ces composés,
(c) au moins un tensioactif qui est un tensioactif ionique et/ou un tensioactif non ionique, en une quantité, rapportée à la composition totale, de 0 g/L à 150 g/L,
(d)un solvant organique incluant un amide d'acide gras en une quantité, rapportée à la composition totale, de 10 g/L à 500 g/L,
(e)et de l'eau en une quantité, rapportée à la composition totale, de 200 g/L à 800 g/L,
étant entendu que le sel hydrosoluble de 2,4-D comporte un ou plusieurs des cations organo-ammonium que sont les cations diméthyl-ammonium, diéthyl-ammonium, triéthyl-ammonium, diméthyléthanol-ammonium, diéthanol-ammonium, triéthanol-ammonium, triisopropanol-ammonium, tétraméthyl-ammonium et choline, ou un mélange de ces cations,
la composition formant une composition herbicide stable, transparente et homogène.

2. Procédé de lutte contre des végétaux indésirables, comportant le fait de mettre les végétaux, ou une zone adjacente à ces végétaux pour empêcher leur levée ou leur croissance, en contact avec, en une quantité à effet herbicide, une composition herbicide diluée avant application avec un véhicule agronomiquement admissible, la composition herbicide comprenant :
(a) un sel hydrosoluble de 2,4-D constitué par du 2,4-D en une quantité, rapportée à la composition totale, de 200 g ea/L à 550 g ea/L,
(b)un deuxième herbicide constitué par de l'halauxifène-méthyl en une quantité, rapportée à la composition totale, de 0,1 g ea/L à 20 g ea/L, du fluroxypyr-meptyl en une quantité, rapportée à la composition totale, de 20 g ea/L à 150 g ea/L, ou un mélange de ces composés,
(c) au moins un tensioactif qui est un tensioactif ionique et/ou un tensioactif non ionique, en une quantité, rapportée à la composition totale, de 0 g/L à 150 g/L,
(d)un solvant organique incluant un amide d'acide gras en une quantité, rapportée à la composition totale, de 10 g/L à 500 g/L,
(e) et une phase aqueuse constituée par de l'eau en une quantité, rapportée à la composition totale, de 200 g/L à 800 g/L,
étant entendu que le sel hydrosoluble de 2,4-D comporte un ou plusieurs des cations organo-ammonium que sont les cations diméthyl-ammonium, diéthyl-ammonium, triéthyl-ammonium, diméthyléthanol-ammonium, diéthanol-ammonium, triéthanol-ammonium, triisopropanol-ammonium, tétraméthyl-ammonium et choline, ou un mélange de ces cations,
la composition formant une composition herbicide stable, transparente et homogène.

3. Composition herbicide selon la revendication 1 ou procédé selon la revendication 2, dans laquelle ou lequel les cations organo-ammonium sont les cations diméthyl-ammonium et choline.

4. Composition herbicide ou procédé selon n'importe lesquelles des revendications précédentes, dans laquelle ou lequel le deuxième herbicide est de l'halauxifène-méthyl, et le rapport en poids, exprimé en équivalent acide (ea), du 2,4-D à l'halauxifène-méthyl vaut de 5500/1 à 10/1.

5. Composition herbicide ou procédé selon n'importe lesquelles des revendications précédentes, dans laquelle ou lequel le deuxième herbicide est du fluroxypyr-meptyl, et le rapport en poids, exprimé en équivalent acide (ea), du 2,4-D au fluroxypyr-meptyl vaut de 30/1 à 1/1.

6. Composition herbicide ou procédé selon n'importe lesquelles des revendications précédentes, dans laquelle ou lequel le deuxième herbicide est un mélange d'halauxifène-méthyl et de fluroxypyr-meptyl.

7. Composition herbicide ou procédé selon n'importe lesquelles des revendications précédentes, qui comporte par ailleurs un adjuvant ou véhicule agronomiquement admissible.

8. Composition herbicide ou procédé selon n'importe lesquelles des revendications précédentes, qui comporte par ailleurs un agent phytoprotecteur anti-herbicide.

9. Procédé selon n'importe lesquelles des revendications précédentes, dans lequel on lutte contre les végétaux indésirables dans une culture tolérante aux herbicides.

10. Procédé selon la revendication 9, dans lequel la culture tolérante aux herbicides possède un caractère unique, ou des caractères multiples ou cumulés, se traduisant par une tolérance à un ou plusieurs produit(s) chimique(s) du type herbicide et/ou inhibiteur(s) doté(s) d'un mode d'action unique ou de multiples modes d'action.

11. Procédé selon n'importe laquelle des revendications 9 et 10, dans lequel les végétaux indésirables comportent une adventice tolérante ou résistante aux herbicides.
